# EUROPÄISCHE PATENTSCHRIFT

(11) **EP 3 600 988 B1**
(45) Veröffentlichungstag und Bekanntmachung des Hinweises auf die Patenterteilung: **26.05.2021**
(21) Anmeldenummer: 18711853.4
(22) Anmeldetag: 06.03.2018
(51) Int. Cl.: B60T 8/40

(54) **VERFAHREN ZUM BETREIBEN EINES BREMSSYSTEMS UND BREMSSYSTEM**
METHOD FOR OPERATING A BRAKING SYSTEM AND BRAKING SYSTEM
PROCÉDÉ PERMETTANT DE FAIRE FONCTIONNER UN SYSTÈME DE FREINAGE ET SYSTÈME DE FREINAGE

(30) Priorität: 20.03.2017 DE 102017204559
(43) Veröffentlichungstag der Anmeldung: 05.02.2020
(73) Patentinhaber: Continental Teves AG & Co. OHG, 60488 Frankfurt am Main (DE)
(72) Erfinder: KOHL, Andreas, 55126 Mainz (DE); WICKENHÖFER, Thorsten, 65719 Hofheim (DE)
(74) Vertreter: Continental Corporation
(86) Internationale Anmeldenummer: PCT/EP2018/055438
(87) Internationale Veröffentlichungsnummer: WO 2018/172060

(56) Entgegenhaltungen:
- DE-A1-102013 204 778
- JP-A- 2010 013 068
- JP-A- 2014 227 056

## Beschreibung

Die Erfindung betrifft ein Verfahren zum Betreiben eines Bremssystems für Kraftfahrzeuge gemäß dem Anspruch 1.

In der Kraftfahrzeugtechnik finden elektrohydraulische "Brake-by-Wire"-Bremsanlagen eine immer größere Verbreitung. Derartige Bremsanlagen umfassen oftmals neben einem durch den Fahrzeugführer betätigbaren Hauptbremszylinder eine elektrisch ("by-Wire") ansteuerbare Druckbereitstellungseinrichtung, mittels welcher in der Betriebsart "Brake-by-Wire" eine Druckbeaufschlagung der Radbremsen stattfindet.

Bei diesen elektrohydraulischen Bremssystemen ist der Fahrer von dem direkten Zugriff auf die Radbremsen entkoppelbar. Diese Funktion wird in einer Betriebsart "Brake-by-Wire" genutzt. Bei einer Betätigung des Pedals wird der Bremswunsch des Fahrers erfasst und eine Pedalentkopplungseinheit und ein Simulator werden aktiviert. Das vom Fahrer durch seine Pedalbetätigung aus dem Hauptbremszylinder verdrängte Hydraulikvolumen strömt in den Simulator, der dazu dient, dem Fahrer ein möglichst vertrautes und komfortables Bremspedalgefühl zu vermitteln. Der mit Hilfe von Sensoren erfasste Bremswunsch führt zu der Bestimmung einer Sollbremswirkung, woraus dann ein Sollbremsdruck für die Bremsen ermittelt wird. Der entsprechende Ist-Bremsdruck in den Radbremsen wird dann aktiv von einer elektrisch ansteuerbare Druckbereitstellungseinrichtung zur Verfügung gestellt.

Das tatsächliche Bremsen erfolgt also durch aktiven Druckaufbau in den Bremskreisen mit Hilfe der Druckbereitstellungseinrichtung, die von einer Steuer- und Regeleinheit angesteuert wird. Durch die hydraulische Entkopplung der Bremspedalbetätigung von dem Druckaufbau in den Radbremsen lassen sich in derartigen Bremssystemen viele Funktionalitäten wie ABS, ESC, TCS, Hanganfahrhilfe etc. in einer technisch effizienten und für den Fahrer aufgrund der Pedalentkopplung besonders komfortable Weise verwirklichen.

In derartigen Bremssystemen ist gewöhnlich eine hydraulische Rückfallebene vorgesehen, in der der Fahrer durch Muskelkraft bei Betätigung des Bremspedals das Fahrzeug abbremsen bzw. zum Stehen bringen kann, wenn die "By-Wire"-Betriebsart ausfällt oder gestört ist. Während im Normalbetrieb durch eine Pedalentkopplungseinheit die oben beschriebene hydraulische Entkopplung zwischen Bremspedalbetätigung und Bremsdruckaufbau an den Radbremsen erfolgt, wird in der Rückfallebene diese Entkopplung aufgehoben, so dass der Fahrer direkt Druckmittel in die Bremskreise bzw. Radbremsen verschieben kann. In die Rückfallebene wird geschaltet, wenn mit Hilfe der Druckbereitstellungseinrichtung kein Druckaufbau mehr möglich ist. Dies ist u.a. dann der Fall, wenn ein Rückschlagventil, welches die Druckbereitstellungseinrichtung mit einem Reservoir verbindet, nicht mehr zuverlässig sperrt, so dass ein Druckaufbau nicht mehr zuverlässig möglich ist.

Die Druckbereitstellungseinrichtung in oben beschriebenen Bremssystemen wird auch als Aktuator bzw. elektrohydraulischer Aktuator bezeichnet. Beispielsweise wird ein elektrohydraulischer Aktuator durch einen elektromechanischen Linearaktuator gebildet, der zum Druckaufbau ein Kolben axial in einen hydraulischen Druckraum verschiebt. Der elektromechanische Linearaktuator wird meist durch die Kombination eines Elektromotors mit einem Rotations-Translationsgetriebe gebildet.

Aus der DE 10 2013 204 778 A1 ist eine "Brake-by-Wire"-Bremsanlage für Kraftfahrzeuge bekannt, welche einen bremspedalbetätigbaren Tandemhauptbremszylinder, dessen Druckräume jeweils über ein elektrisch betätigbares Trennventil trennbar mit einem Bremskreis mit zwei Radbremsen verbunden sind, eine mit dem Hauptbremszylinder hydraulisch verbundene, zu- und abschaltbare Simulationseinrichtung, und eine elektrisch steuerbare Druckbereitstellungseinrichtung, welche durch eine Zylinder-Kolben-Anordnung mit einem hydraulischen Druckraum gebildet wird, deren Kolben durch einen elektromechanischen Linearaktuator verschiebbar ist, umfasst, wobei die Druckbereitstellungseinrichtung über zwei elektrisch betätigbare Zuschaltventile mit Bremskreisversorgungsleitungen verbindbar ist.

Das Bremssystem wird beispielsweise durch Betätigung der Zündung aktiviert, so dass es in die By-Wire-Betriebsart wechselt. Dabei kann es vorkommen, dass der Fahrer bereits vor der Aktivierung der By-Wire-Betriebsart das Bremspedal betätigt hat und auf diese Weise Bremsflüssigkeit aus dem Hauptbremszylinder in Richtung der Radbremsen verschoben hat. Wird das System unter betätigtem Bremspedal geweckt und geht nach dieser Betätigung by-Wire, ergibt sich dadurch eine Verstimmung des Volumenhaushaltes in der Hydraulik, die sich dermaßen äußert, dass das vorhandene Volumen beim Pedallösen nicht mehr ausreichend abgebaut werden kann, da der Linearaktuator nur das Volumen wieder aufnehmen kann, welches er selbst verschoben hat, nicht jedoch das bereits durch den Fahrer verschobene Volumen. Um dieses Überschussvolumen abzubauen, werden gewöhnlich die Auslassventile betätigt. Dies verursacht jedoch deutliche Geräusche, die zu Irritationen und Störungen des Fahrers und letztendlich zu Beanstandungen führen können. Werden die Auslassventile zudem bei einer nur geringen Druckdifferenz geöffnet, besteht das Problem der Verschmutzung und demzufolge kann eine Leckage entstehen.

Der Erfindung liegt daher die Aufgabe zugrunde, ein Verfahren zum Betreiben eines oben genannten Bremssystems dahingehend zu verbessern, dass Überschussvolumen deutlich lautloser abgebaut wird. Weiterhin soll ein entsprechendes Bremssystem angegeben werden.

In Bezug auf das Verfahren wird diese Aufgabe erfindungsgemäß dadurch gelöst, dass in der By-Wire-Betriebsart bei einem Druckmittelüberschuss in den Radbremsen das zweite Trennventil geöffnet wird, wenn ein Lösen des Bremspedals durch den Fahrer erkannt wird, so dass überschüssiges Druckmittel in die Sekundärdruckkammer fließen bzw. abfließen kann.

Vorteilhafte Ausgestaltungen der Erfindung sind Gegenstand der Unteransprüche.

Die Erfindung geht von der Überlegung aus, dass die bisher verwendete Maßnahme, bei einer Verstimmung des Volumenhaushaltes das überschüssige Bremsvolumen bei der Aktivierung des By-Wire-Bremssystems abzuleiten, den Fahrer irritiert bzw. stört. Das Öffnen der Auslassventile ist gewöhnlich mit lauten Geräuschen verbunden, die der Fahrer nicht erwartet und die ihm ein unkomfortables Gefühl vermitteln oder ihm den Fehlschuss nahelegen, dass das Bremssystem defekt ist. Es wäre daher wünschenswert, das Überschussvolumen geräuschlos und trotzdem zuverlässig abzubauen. Die Auslassventile sollten selten zudem betätigt werden sollten, insbesondere dann, wenn nur geringe Druckdifferenzen vorliegen, um ihre Lebensdauer nicht unnötig zu verkürzen und Verschmutzungen des Ventilsitzes zu vermeiden.

Wie nunmehr erkannt wurde, kann dies erreicht werden, indem das überschüssige Volumen in die Sekundärdruckkammer des Hauptbremszylinders verschoben wird. Dieser Vorgang erfolgt im Wesentlichen geräuschlos und führt zu keiner merklichen Beeinträchtigung des Fahrers. Wenn Druckmittel in die Sekundärdruckkammer fließt, wird der Sekundärkolben zurückgeschoben in seine Ausgangsstellung bzw. Lösestellung, so dass die hydraulische Verbindung zwischen der Sekundärdruckkammer und dem Druckmittelvorratsbehälter durch die Öffnungen im Tandemhauptbremszylinder bzw. Schnüffellöcher freigegeben wird. Druckmittel kann auf diese Weise aus der Sekundärdruckkammer in den Druckmittelvorratsbehälter abströmen.

Ein Druckmittelüberschuss bzw. Bremsmittelüberschuss bezeichnet hierbei ein Druckmittelvolumen, welches im by-wire-Betrieb bei unbetätigtem Bremspedal bzw. maximaler Volumenaufnahme der Druckkammer der Druckbereitstellungseinrichtung nicht mehr aufgenommen werden kann.

Bevorzugt umfasst die Bremsanlage zumindest ein elektrisch betätigbares Radventil je Radbremse zum Einstellen radindividueller Bremsdrücke.

In der Sekundärdruckkammer ist vorteilhafterweise ein elastisches Element angeordnet ist, mit dem der Sekundärkolben beaufschlagt wird. Der Sekundärkolben, der schwimmend gelagert ist, wird durch das elastische Element, welches bevorzugt als Feder ausgebildet ist, bei unbetätigtem Bremspedal in seine Ruhelage verschoben. In seiner Ruhelage gibt der Schwimmkolben Öffnungsbohrungen zum Bremsflüssigkeitsreservoir frei, die sogenannten "Schnüffellöcher", durch diese Bohrungen kann die überschüssige Bremsflüssigkeit geräuschlos in das Bremsflüssigkeitsreservoir abfließen.

Die Pedalstellung, d.h. die aktuelle Stellung des Bremspedals, wird bevorzugt mit Hilfe eines Pedalwegsensors beobachtet bzw. ermittelt. Der Pedalwegsensor ist vorteilhafterweise redundant ausgeführt, so dass die Zuverlässigkeit seines Signals im laufenden Betrieb überprüft werden kann.

Ein Lösen des Bremspedals wird vorzugsweise erkannt, wenn der Pedalweg einen vorgegebenen Pedalwegschwellenwert unterschreitet und/oder wenn die Pedallösegeschwindigkeit einen vorgegebenen negativen Pedallösegradient unterschreitet und das Pedal in Richtung der Lösestellung bewegt wird.

Das zweite Trennventil bleibt vorzugweise solange geöffnet, bis ein Bremswunsch des Fahrers erkannt wird und wird erst dann wieder geschlossen. Dann wird auch das erste Trennventil wieder geschlossen, so dass der Tandemhauptbremszylinder hydraulisch von den Radbremsen abgekoppelt wird, so dass im by-wire-Betrieb Druck aktiv mittels der Druckbereitstellungseinrichtung aufgebaut werden kann.

Das zweite Trennventil bleibt bevorzugt solange geöffnet, bis ein Bremswunsch des Fahrers erkannt wird. Insbesondere bleibt das zweite Trennventil bevorzugt solange geöffnet, bis der vorgegebene Pedalwegschwellwert überschritten ist. Dieser Schwellwert ist kleiner als der notwendige Weg, um die Öffnungen in der Sekundärdruckkammer, die hydraulisch diese Kammer im unbetätigten Zustand des Sekundärkolbens mit dem Druckmittelvorratsbehälter verbinden (Schnüffellöcher), zu verschließen. Im By-Wire Betrieb werden somit die Trennventile vorzugsweise geschlossen, wenn der Pedalweg einen vorgegebenen Pedalwegschwellenwert überschreitet. Dadurch wird der aktive Druckaufbau aufgrund des Bremswunsches des Fahrers im Brake-by-Wire-Betrieb ermöglicht.

Das zweite Trennventil wird bevorzugt geschlossen gehalten, bis der Pedalweg unter einen Pedalwegschwellwert gefallen ist. Der Fahrer hat durch das Lösen des Pedals die Bremsung beendet und die Trennventile fallen in ihren stromlos geöffneten Zustand zurück.

Liegt jedoch eine Betätigung vor, bevor die Anlage aktiviert wurde, gibt es auch keine Sensierung des Bremspedalweges durch den Sensor und keine Aktivierung der Trennventile.

Das Vorliegen eines Druckmittelüberschusses wird bevorzugt dadurch erkannt, dass die Druckbereitstellungseinrichtung sensiert, dass sie den Druck nicht vollständig alleine abbauen kann.

In Bezug auf das Bremssystem wird die oben genannte Aufgabe erfindungsgemäß gelöst mit Mitteln, mittels derer ein oben beschriebenes Verfahren durchgeführt wird. Insbesondere ist eine elektronische Steuer- und Regeleinheit vorgesehen, in der das Verfahren software- und/oder hardwaremäßig implementiert ist.

Die Vorteile der Erfindung liegen insbesondere darin, dass durch das vorgeschlagene Verfahren überschüssiges Bremsvolumen geräuscharm abgebaut werden kann, so dass der Fahrer weder irritiert noch gestört wird. Da hierzu nicht die Auslassventile geöffnet werden müssen, werden diese geschont, so dass die Lebensdauer der Bremsanlage erhöht wird.

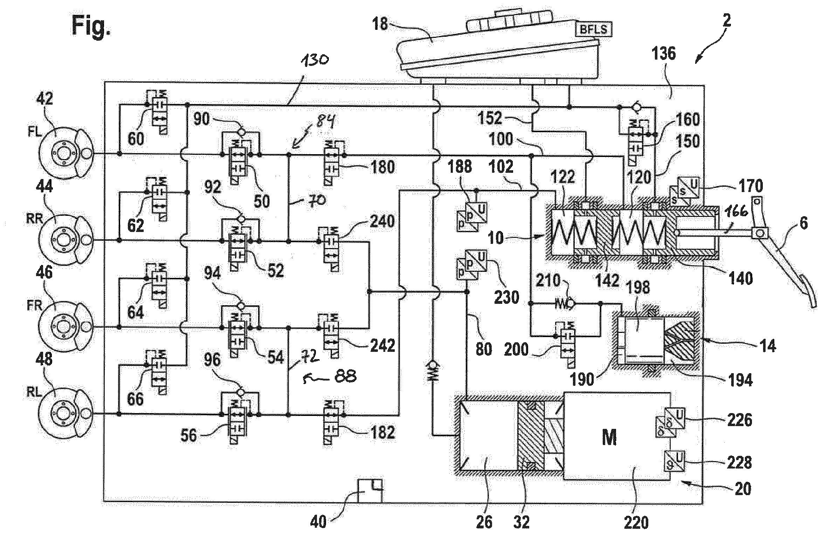

Ein Ausführungsbeispiel der Erfindung wird anhand einer Zeichnung näher erläutert. Darin zeigt die einzige Figur ein bevorzugtes Ausführungsbeispiel einer erfindungsgemäßen Bremsanlage.

Bremsanlage 2 umfasst einen mittels eines Betätigungs- bzw. Bremspedals 6 betätigbaren Hauptbremszylinder 10, eine mit dem Hauptbremszylinder 10 zusammenwirkende Simulationseinrichtung 14, einen dem Hauptbremszylinder 10 zugeordneten, unter Atmosphärendruck stehenden Druckmittelvorratsbehälter 18, eine elektrisch steuerbare Druckbereitstellungseinrichtung 20, welche durch eine Zylinder-Kolben-Anordnung mit einem hydraulischen Druckraum 26 gebildet wird, deren Kolben 32 durch einen elektromechanischen Aktuator verschiebbar ist, eine elektrisch steuerbare Druckmodulationseinrichtung zum Einstellen radindividueller Bremsdrücke und eine elektronische Steuer- und Regeleinheit 40.

Die nicht näher bezeichnete Druckmodulationseinrichtung umfasst beispielsgemäß hydraulisch betätigbare Radbremsen 42, 44, 46 ,48 und je betätigbarer Radbremse 42 bis 48 ein Einlassventil 50, 52, 54, 56 und ein Auslassventil 60, 62, 64, 66, die paarweise über Mittenanschlüsse hydraulisch zusammengeschaltet und an die Radbremsen 42 bis 48 angeschlossen sind. Die Eingangsanschlüsse der Einlassventile 50 bis 56 werden mittels Bremskreisversorgungsleitungen 70, 72 mit Drücken versorgt, die in einer "Brake-by-Wire"-Betriebsart aus einem Systemdruck abgeleitet werden, der in einer an den Druckraum 26 der Druckbereitstellungseinrichtung 20 angeschlossenen Systemdruckleitung 80 vorliegt und dem von der Druckbereitstellungseinrichtung bereitgestellten Druck entspricht. Die Bremsen 42, 44 sind dabei an einen ersten Bremskreis 84, die Bremsen 46, 48 an einen zweiten Bremskreis 88 hydraulisch angeschlossen.

Den Einlassventilen 50 bis 56 ist jeweils ein zu den Bremskreisversorgungsleitungen 70, 72 hin öffnendes Rückschlagventil 90, 92, 94, 96 parallel geschaltet. In einer Rückfallebenenbetriebsart werden die Bremskreisversorgungsleitungen 70, 72 über hydraulische Leitungen 100, 102 mit den Drücken des Bremsmittels aus Druckräumen 120, 122 des Hauptbremszylinders 10 beaufschlagt. Die Ausgangsanschlüsse der Auslassventile 60 bis 66 sind über eine Rücklaufleitung 130 mit dem Druckmittelvorratsbehälter 18 verbunden.

Der Hauptbremszylinder 10 weist in einem Gehäuse 136 zwei hintereinander angeordnete Kolben 140, 142 auf, die die hydraulischen Druckräume 120, 122 begrenzen. Die Druckräume 120, 122 stehen einerseits über in den Kolben 140, 142 ausgebildete radiale Bohrungen sowie entsprechende Druckausgleichsleitungen 150, 152 mit dem Druckmittelvorratsbehälter 18 in Verbindung, wobei die Verbindungen durch eine Relativbewegung der Kolben 140, 42 im Gehäuse 136 absperrbar sind. Die Druckräume 120, 122 stehen andererseits mittels der hydraulischen Leitungen 100, 102 mit den bereits genannten Bremskreisversorgungsleitungen 70, 72 in Verbindung.

In der Druckausgleichsleitung 150 ist ein stromlos offenes Ventil 160 enthalten. Die Druckräume 120, 122 nehmen nicht näher bezeichnete Rückstellfedern auf, die die Kolben 140, 142 bei unbetätigtem Hauptbremszylinder 10 in einer Ausgangslage positionieren. Eine Kolbenstange 166 koppelt die Schwenkbewegung des Bremspedals 6 infolge einer Pedalbetätigung mit der Translationsbewegung des ersten Hauptbremszylinderkolbens 140 bzw. Primärkolbens, dessen Betätigungsweg von einem, vorzugsweise redundant ausgeführten, Wegsensor 170 erfasst wird. Dadurch ist das entsprechende Kolbenwegsignal ein Maß für den Bremspedalbetätigungswinkel. Es repräsentiert einen Bremswunsch des Fahrzeugführers.

In den an die Druckräume 120, 122 angeschlossenen Leitungsabschnitten 100, 102 ist je ein Trennventil 180, 182 angeordnet, welches als ein elektrisch betätigbares, vorzugsweise stromlos offenes, 2/2-Wegeventil ausgebildet ist. Durch die Trennventile 180, 182 kann die hydraulische Verbindung zwischen den Druckräumen 120, 122 des Hauptbremszylinders 10 und den Bremskreisversorgungsleitungen 70, 72 abgesperrt werden. Ein an den Leitungsabschnitt 102 angeschlossener Drucksensor 188 erfasst den im Druckraum 122 durch ein Verschieben des zweiten Kolbens 142 aufgebauten Druck.

Die Simulationseinrichtung 14 ist hydraulisch an den Hauptbremszylinder 10 ankoppelbar und umfasst beispielsgemäß im Wesentlichen eine Simulatorkammer 190, eine Simulatorfederkammer 194 sowie einen die beiden Kammern 190, 194 voneinander trennenden Simulatorkolben 198. Der Simulatorkolben 198 stützt sich durch ein in der Simulatorfederkammer 194 angeordnetes elastisches Element (z. B eine Feder), welches vorteilhafterweise vorgespannt ist, am Gehäuse 136 ab. Die Simulatorkammer 190 ist mittels eines elektrisch betätigbaren Simulatorventils 200 mit dem ersten Druckraum 120 des Hauptbremszylinders 10 verbindbar. Bei Vorgabe einer Pedalkraft und geöffnetem Simulatorventil 200 strömt Druckmittel vom Hauptbremszylinder-Druckraum 120 in die Simulatorkammer 190. Ein hydraulisch antiparallel zum Simulatorventil 200 angeordnetes Rückschlagventil 210 ermöglicht unabhängig vom Schaltzustand des Simulatorventils 200 ein weitgehend ungehindertes Zurückströmen des Druckmittels von der Simulatorkammer 190 zum Hauptbremszylinder-Druckraum 120. Andere Ausführungen und Anbindungen der Simulationseinrichtung an den Hauptbremszylinder 10 sind denkbar.

Die elektrisch steuerbare Druckbereitstellungseinrichtung 20 ist als eine hydraulische Zylinder-Kolben-Anordnung bzw. ein einkreisiger elektrohydraulischer Aktuator ausgebildet, deren/dessen Druckkolben 32, welcher den Druckraum 26 begrenzt, von einem schematisch angedeuteten Elektromotor 220 unter Zwischenschaltung eines ebenfalls schematisch dargestellten Rotations-Translationsgetriebes, welches bevorzugt als Kugelgewindetrieb (KGT) ausgebildet ist, betätigbar ist. Ein der Erfassung der Rotorlage des Elektromotors 220 dienender, lediglich schematisch angedeuteter Rotorlagesensor ist mit dem Bezugszeichen 226 bezeichnet. Zusätzlich kann auch ein Temperatursensor 228 zum Sensieren der Temperatur der Motorwicklung verwendet werden.

Der durch die Kraftwirkung des Kolbens 32 auf das in dem Druckraum 26 eingeschlossene Druckmittel erzeugte Aktuatordruck wird in die Systemdruckleitung 80 eingespeist und mit einem vorzugsweise redundant ausgeführten Drucksensor 230 erfasst. Bei geöffneten Druckzuschaltventilen 240, 242 gelangt das Druckmittel in die Radbremsen 42 bis 48 zu deren Betätigung. Durch Vor- und Zurückschieben des Kolbens 32 erfolgt so bei geöffneten Druckzuschaltventilen 240, 242 bei einer Normalbremsung in der "Brake-by-Wire"-Betriebsart ein Radbremsdruckaufbau und -abbau für alle Radbremsen 42 bis 48.

Beim Druckabbau strömt dabei das vorher aus dem Druckraum 26 in die Radbremsen 42 bis 48 verschobene Druckmittel auf dem gleichen Wege wieder in den Druckraum 26 zurück. Dagegen strömt bei einer Bremsung mit radindividuell unterschiedlichen, mit Hilfe der Einlass- und Auslassventile 50 bis 56, 60 bis 66 geregelten Radbremsdrücken (z. B bei einer Antiblockierregelung (ABS-Regelung)) der über die Auslassventile 60 bis 66 abgelassene Druckmittelanteil in den Druckmittelvorratsbehälter 18 und steht somit zunächst der Druckbereitstellungseinrichtung 20 zur Betätigung der Radbremsen 42 bis 48 nicht mehr zur Verfügung.

Bei einer Betätigung des Bremspedals 6 wird Druckmittel bzw. Bremsflüssigkeit aus den Kammern 120, 122 in Richtung der Radbremsen 42, 44, 46, 48 verschoben. Es kann auch vorkommen, dass der Fahrer das Bremspedal 6 betätigt, bevor das Bremssystem 2 aktiviert wird, d.h. in den Brake-by-Wire-Betrieb geschaltet wird. Erfolgt dann die Aktivierung des Bremssystems 2, liegt eine Verstimmung des Volumenhaushaltes in der Hydraulik vor, die sich dermaßen äußert, dass das vorhandene Volumen beim Pedallösen nicht mehr ausreichend abgebaut werden kann.

Um den Volumenhaushalt bei Vorliegen eines Druckmittelüberschusses auszugleichen, ohne dabei die Auslassventile 60-66 zu öffnen, was zu lauten Störungen des Fahrers führen kann, wird das Trennventil 182 geöffnet, wenn erkannt wird, dass der Fahrer nach einem erfolgten Bremsvorgang das Bremspedal 6 wieder löst. Der Pedalweg wird dabei mit Hilfe des Pedalwegsensors 170 sensiert. Ein Lösen des Bremspedals 6 wird hierbei erkannt, wenn der Pedalweg einen vorgegebenen Pedalwertschwellenwert unterschreitet. Durch das Öffnen des Trennventils 182 fließt Bremsmittel zurück in die Sekundärkammer 122. Dadurch wird der Sekundärkolben 142 zurückgeschoben, d.h. in Richtung seines unbetätigten Zustandes geschoben. Wird dieser Zustand erreicht, öffnet sich der hydraulische Zugang (das "Schnüffelloch") zum Druckmittelvorratsbehälter 18, und das Druckmittel kann in den Druckmittelvorratsbehälter 18 abfließen. Da während dieses Vorganges der Sekundärkolben 142 gegen eine Feder arbeitet, wird diese zunächst zusammengedrückt, bevor sich der Vorgang am Primärkolben 140 bemerkbar macht. Der Fahrer spürt somit keinen oder nur sehr geringen Gegendruck am Bremspedal, so dass der Ausgleich des hydraulischen Volumenhaushalts weitgehend komfortable und geräuschlos vonstattengeht.

Nach Durchführung des Verfahrens ist der Bremsmittelvolumenhaushalt im Bremssystem wieder ausgeglichen, so dass es, solange das Bremssystem im By-Wire-Modus verbleibt, gewöhnlich nicht wiederholt werden muss.

## Patentansprüche

1. Verfahren zum Betreiben eines Bremssystems (2) für Kraftfahrzeuge umfassend
• hydraulisch betätigbare Radbremsen (42, 44, 46, 48);
• eine elektrisch steuerbare Druckbereitstellungseinrichtung (20) zur hydraulischen Betätigung der Radbremsen (42, 44, 46, 48), welche durch eine Zylinder-Kolben-Anordnung mit einem hydraulischen Druckraum (26) gebildet ist, deren Druckkolben (32) durch einen Elektromotor (220) und ein Rotations-Translationsgetriebe verschiebbar ist;
• eine mit einem Bremspedal (6) betätigbare Betätigungseinrichtung, umfassend einen Tandemhauptbremszylinder (10) mit einer Primärdruckkammer (120), in die bei Betätigung eines Bremspedals (6) ein Primärkolben (140) verschoben wird, und einer Sekundärdruckkammer (122) und einem schwimmend gelagerten Sekundärkolben (142), wobei die Primärdruckkammer (120) durch ein erstes stromlos offenes Trennventil (180) von einem ersten Teil der Radbremsen (42, 44) hydraulisch abtrennbar ist, und wobei die Sekundärdruckkammer (122) durch ein zweites stromlos offenes Trennventil (182) von einem zweiten Teil der Radbremsen (46, 48) hydraulisch abtrennbar ist;
• einen unter Atmosphärendruck stehenden Druckmittelvorratsbehälter (18), der im unbetätigten Zustand des Sekundärkolbens (142) mit der Sekundärdruckkammer (122) des Hauptbremszylinders (10) hydraulisch verbunden ist;
• einen hydraulisch ausgebildeten Simulator (14) mit einem Simulatorkolben (198) und einer Simulatorfeder, der dazu eingerichtet ist, die hydraulische Volumenaufnahme druckbeaufschlagter Radbremsen zu simulieren,
wobei das Bremssystem (2) aktiviert wird, um in einer By-Wire-Betriebsart mittels der Druckbereitstellungseinrichtung (20) aktiv Druck in den Radbremsen (42, 44, 46, 48) aufzubauen,
**dadurch gekennzeichnet, dass**
in der By-Wire-Betriebsart bei einem Druckmittelüberschuss in den Radbremsen (42-48) das zweite Trennventil (182) geöffnet wird, wenn ein Lösen des Bremspedals (6) durch den Fahrer erkannt wird, so dass überschüssiges Druckmittel in die Sekundärdruckkammer (122) fließen kann.

2. Verfahren nach Anspruch 1, wobei die Druckbereitstellungseinrichtung in der By-Wire-Betriebsart mittels zweier stromlos geschlossener Druckzuschaltventile (240, 242) mit den Radbremsen hydraulisch verbunden wird.

3. Verfahren nach Anspruch 2, wobei in der Sekundärdruckkammer (122) ein elastisches Element angeordnet ist, mit dem der Sekundärkolben (142) beaufschlagt wird.

4. Verfahren nach einem der Ansprüche 1 bis 3, wobei die Pedalstellung des Bremspedals (6) mit Hilfe eines Pedalwegsensors (170) beobachtet wird.

5. Verfahren nach Anspruch 4, wobei ein Lösen des Bremspedals (6) erkannt wird, wenn der Pedalweg einen vorgegebenen Pedalwegschwellenwert unterschreitet und/oder wenn die Pedallösegeschwindigkeit einen vorgegebenen negativen Pedallösegradienten unterschreitet und das Pedal in Richtung der Lösestellung bewegt wird.

6. Verfahren nach einem der Ansprüche 1 bis 5, wobei das zweite Trennventil (182) solange geöffnet bleibt, bis ein Bremswunsch des Fahrers erkannt wird.

7. Verfahren nach einem der Ansprüche 1 bis 6, wobei in der By-Wire-Betriebsart das zweite Trennventil (182) wieder geschlossen wird, wenn ein Bremswunsch des Fahrers erkannt wird.

8. Verfahren nach Anspruch 7, wenn rückbezogen auf Anspruch 4, wobei in der By-Wire-Betriebsart die Trennventile (180, 182) geschlossen werden, wenn der Pedalweg einen vorgegebenen Pedalwegschwellenwert überschreitet.

9. Verfahren zum Betreiben eines Bremssystems (2) nach einem der vorherigen Ansprüche, wobei das Vorliegen eines Druckmittelüberschusses erkannt wird, indem die Druckbereitstellungseinrichtung (20) sensiert, dass sie den Druck nicht vollständig alleine abbauen kann.

10. Bremssystem (2) mit Mitteln (40), mittels derer ein Verfahren nach einem der vorherigen Ansprüche durchgeführt wird.

## Claims

1. Method for operating a braking system (2) for motor vehicles, comprising
• hydraulically actuatable wheel brakes (42, 44, 46, 48) ;
• an electrically controllable pressure-providing device (20) for hydraulically actuating the wheel brakes (42, 44, 46, 48), which device is formed by a cylinder-piston arrangement with a hydraulic pressure chamber (26), the pressure piston (32) of which can be displaced by an electric motor (220) and a rotation-translation gear mechanism;
• an actuating device which can be actuated by means of a brake pedal (6) and which comprises a tandem master brake cylinder (10) with a primary pressure chamber (120), into which a primary piston (140) is pushed on actuation of a brake pedal (6), and a secondary pressure chamber (122) and a floatingly mounted secondary piston (142), wherein the primary pressure chamber (120) can be hydraulically separated from a first set of the wheel brakes (42, 44) by means of a first, normally open separating valve (180), and wherein the secondary pressure chamber (122) can be hydraulically separated from a second set of the wheel brakes (46, 48) by means of a second, normally open separating valve (182);
• a pressure medium reservoir (18), which is under atmospheric pressure and which is hydraulically connected to the secondary pressure chamber (122) of the master brake cylinder (10) in the unactuated state of the secondary piston (142);
• a hydraulically configured simulator (14) with a simulator piston (198) and a simulator spring, which is configured to simulate the hydraulic volume absorption of pressurized wheel brakes, wherein the braking system (2) is activated in order to actively build up pressure in the wheel brakes (42, 44, 46, 48) in a by-wire operating mode by means of the pressure-providing device (20),
**characterized in that**
in the event of a pressure medium surplus in the wheel brakes (42-48), the second separating valve (182) is opened in the by-wire operating mode if a release of the brake pedal (6) by the driver is detected, so that surplus pressure medium can flow into the secondary pressure chamber (122).

2. Method according to Claim 1, wherein the pressure-providing device is hydraulically connected to the wheel brakes in the by-wire operating mode by means of two normally closed pressure actuation valves (240, 242).

3. Method according to Claim 2, wherein an elastic element which loads the secondary piston (142) is arranged in the secondary pressure chamber (122).

4. Method according to one of Claims 1 to 3, wherein the pedal position of the brake pedal (6) is observed by means of a pedal travel sensor (170).

5. Method according to Claim 4, wherein a release of the brake pedal (6) is detected when the pedal travel is less than a predefined pedal travel threshold value, and/or when the pedal release speed lies below a predefined negative pedal release gradient and the pedal is moved in the direction of the release position.

6. Method according to any of Claims 1 to 5, wherein the second separating valve (182) remains open until a braking request by the driver is detected.

7. Method according to any of Claims 1 to 6, wherein in the by-wire operating mode, the second separating valve (182) is closed again if a braking request by the driver is detected.

8. Method according to Claim 7 with reference to Claim 4, wherein in the by-wire operating mode, the separating valves (180, 182) are closed if the pedal travel exceeds a predefined pedal travel threshold value.

9. Method for operating a braking system (2) according to any of the preceding claims, wherein the presence of a pressure medium surplus is detected if the pressure-providing device (20) senses that it cannot build up the complete pressure alone.

10. Braking system (2) having means (40) for carrying out a method according to any of the preceding claims.

## Revendications

1. Procédé permettant de faire fonctionner un système de freinage (2) pour véhicules automobiles, comprenant
• des freins de roue (42, 44, 46, 48) à actionnement hydraulique ;
• un dispositif de fourniture de pression (20) à commande électrique pour l'actionnement hydraulique des freins de roue (42, 44, 46, 48), qui est formé par un ensemble piston-cylindre doté d'une chambre de pression hydraulique (26) dont le piston de pression (32) peut être déplacé par un moteur électrique (220) et un mécanisme de rotation-translation ;
• un dispositif d'actionnement pouvant être actionné par une pédale de frein (6), comprenant un maître-cylindre tandem (10) doté d'une chambre de pression primaire (120) dans laquelle un piston primaire (140) est déplacé lorsqu'une pédale de frein (6) est actionnée, et d'une chambre de pression secondaire (122) et d'un piston secondaire (142) monté flottant, la chambre de pression primaire (120) pouvant être séparée hydrauliquement d'une première partie des freins de roue (42, 44) par une première soupape de séparation (180) ouverte hors tension, et la chambre de pression secondaire (122) pouvant être séparée hydrauliquement d'une deuxième partie des freins de roue (46, 48) par une deuxième soupape de séparation (182) ouverte hors tension ;
• un réservoir de fluide sous pression (18) sous pression atmosphérique qui, à l'état non actionné du piston secondaire (142), est relié hydrauliquement à la chambre de pression secondaire (122) du maître-cylindre (10) ;
• un simulateur (14) réalisé de manière hydraulique, doté d'un piston de simulateur (198) et d'un ressort de simulateur, qui est aménagé pour simuler l'admission de volume hydraulique des freins de roue mis sous pression,
le système de freinage (2) étant activé, dans un mode de fonctionnement à câble, pour créer activement une pression dans les freins de roue (42, 44, 46, 48) au moyen du dispositif de fourniture de pression (20), **caractérisé en ce que** dans le mode de fonctionnement à câble, en cas d'excédent de fluide sous pression dans les freins de roue (42 à 48), la deuxième soupape de séparation (182) est ouverte si un relâchement de la pédale de frein (6) par le conducteur est identifié de sorte que le fluide sous pression excédentaire peut s'écouler dans la chambre de pression secondaire (122).

2. Procédé selon la revendication 1, dans lequel, dans le mode de fonctionnement à câble, le dispositif de fourniture de pression est relié hydrauliquement aux freins de roue au moyen de deux soupapes de mise en circuit de pression (240, 242) fermées hors tension.

3. Procédé selon la revendication 2, dans lequel, dans la chambre de pression secondaire (122), un élément élastique est disposé qui est alimenté par le piston secondaire (142).

4. Procédé selon l'une quelconque des revendications 1 à 3, dans lequel la position de pédale de la pédale de frein (6) est surveillée à l'aide d'un capteur de déplacement de pédale (170).

5. Procédé selon la revendication 4, dans lequel un relâchement de la pédale de frein (6) est identifié si la course de pédale soupasse une valeur seuil de course de pédale prédéfinie, et/ou si la vitesse de relâchement de pédale soupasse un gradient de relâchement de pédale négatif prédéfini et la pédale est déplacée en direction de la position de relâchement.

6. Procédé selon l'une quelconque des revendications 1 à 5, dans lequel la deuxième soupape de séparation (182) reste ouverte jusqu'à ce qu'un souhait de freinage du conducteur soit identifié.

7. Procédé selon l'une quelconque des revendications 1 à 6, dans lequel, dans le mode de fonctionnement à câble, la deuxième soupape de séparation (182) est refermée si un souhait de freinage du conducteur est identifié.

8. Procédé selon la revendication 7, en se référant à la revendication 4, dans lequel, dans le mode de fonctionnement à câble, les soupapes de séparation (180, 182) sont fermées si la course de pédale dépasse une valeur seuil de course de pédale prédéfinie.

9. Procédé permettant de faire fonctionner un système de freinage (2) selon l'une quelconque des revendications précédentes, dans lequel la présence d'un excédent de fluide sous pression est identifiée en ce que le dispositif de fourniture de pression (20) détecte qu'il n'est pas en mesure de réduire la pression complètement tout seul.

10. Système de freinage (2), comprenant des moyens (40) permettant d'effectuer un procédé selon l'une quelconque des revendications précédentes.
